# EUROPÄISCHE PATENTANMELDUNG

(11) **EP 4 112 540 A1**
(43) Veröffentlichungstag der Anmeldung: **04.01.2023**
(21) Anmeldenummer: 21020334.5
(22) Anmeldetag: 30.06.2021
(51) Int. Cl.: C01B 3/04, B01D 53/047, C01B 3/56

(54) **VERFAHREN UND VORRICHTUNG ZUR ERZEUGUNG VON WASSERSTOFF AUS AMMONIAK**

(71) Anmelder: Linde GmbH, 82049 Pullach (DE)
(72) Erfinder: Schwarzhuber, Josef, Wolnzach (DE); Heinzel, Albrecht, München (DE); Reinke, Michael, München (DE); Peschel, Andreas, Wolfratshausen (DE)
(74) Vertreter: Fischer, Werner

(57) **Zusammenfassung**

Die Erfindung betrifft ein Verfahren sowie eine Vorrichtung zur Erzeugung von Wasserstoff, wobei ein erster Ammoniak enthaltender Einsatzstoff (3, 3') einem über einen importierten Energieträger (13) beheizten ersten Spaltreaktor (R1) zugeführt wird, um Ammoniak mit katalytischer Unterstützung in Wasserstoff und Stickstoff zu spalten und ein heißes, Wasserstoff und Stickstoff enthaltendes ersten Spaltgas (6, 6') zu erhalten. Kennzeichnend hierbei ist, dass ein zweiter Ammoniak enthaltender Einsatzstoff (4, 2) in einem zweiten Spaltreaktor (R2) zu einem Wasserstoff und Stickstoff enthaltenden zweiten Spaltgas (7, 3') umgesetzt wird, wobei das heiße erste Spaltgas (6, 6') zur Beheizung des zweiten Spaltreaktors (R2) eingesetzt und dabei abgekühlt wird.

## Beschreibung

Die Erfindung betrifft ein Verfahren zur Erzeugung von Wasserstoff, wobei ein erster Ammoniak enthaltender Einsatzstoff einem über einen importierten Energieträger beheizten ersten Spaltreaktor zugeführt wird, um Ammoniak mit katalytischer Unterstützung in Wasserstoff und Stickstoff zu spalten und ein heißes, Wasserstoff und Stickstoff enthaltendes ersten Spaltgas zu erhalten.

Weiterhin betrifft die Erfindung eine Vorrichtung zur Durchführung des erfindungsgemäßen Verfahrens.

Die Erzeugung von Wasserstoff durch katalytisch unterstütze Spaltung von Ammoniak ist bekannt und seit vielen Jahren Stand der Technik. Die dabei ablaufende Reaktion

2NH₃ ↔ N₂ + 3H₂

ist endotherm (ΔH=46,2kJ/mol). Die Lage des Gleichgewichts und die Reaktionsgeschwindigkeit hängen stark von Druck und Temperatur sowie von der Art des eingesetzten Katalysators ab.

Insbesondere für industrielle Anwendungen mit vergleichsweise geringem Wasserstoffbedarf von weniger als 1000mₙ³/h, wie beispielsweise für die Wärmebehandlung von Metallen, wird die Ammoniakspaltung in Spaltreaktoren durchgeführt, zu deren Beheizung an anderer Stelle erzeugter elektrischer Strom importiert wird. Prinzipiell kann der Wasserstoff hierbei ohne Freisetzung von Kohlendioxid zur Verfügung gestellt werden.

Um Wasserstoff aus Ammoniak mit höheren Raten herzustellen, können ähnliche Anlagen eingesetzt werden, wie sie heute zur großtechnischen Synthesegaserzeugung durch Dampfreformierung von Kohlenwasserstoffen verwendet werden. Derartige Anlagen umfassen einen als Dampfreformer bezeichneten Spaltreaktor mit einem Feuerraum, in dem mit Katalysatormaterial gefüllte Spaltrohre angeordnet sind, sowie ein Abhitzesystem. Der Feuerraum wird durch einen oder mehrere mit importiertem Brennstoff betriebene Brenner beheizt, die Energie für die endotherm ablaufende Spaltung des durch die Spaltrohre geführten Ammoniaks liefern.

Damit der erzeugte Wasserstoff ohne oder mit nur geringem Verdichtungsaufwand als Produkt abgegeben werden kann, wird die Ammoniakspaltung zweckmäßigerweise bei Drücken zwischen 20 und 30bar durchgeführt. Dies ist umso einfacher möglich, als das für die Spaltung bestimmte Ammoniak gewöhnlich flüssig zur Verfügung steht, weshalb sein Druck mit nur geringem Energieaufwand erhöht werden kann. Damit unter diesen Bedingungen ein ausreichend hoher, wirtschaftlich sinnvoller Umsetzungsgrad des eingesetzten Ammoniaks erreicht wird, ist es notwendig, die Spaltung bei hohen Temperaturen zwischen ca. 500 und 1000°C zu betreiben.

Das Spaltgas besteht zu einem großen Teil aus Wasserstoff und Stickstoff, enthält daneben aber auch nicht umgesetztes Ammoniak sowie evtl. Wasser, das bereits in dem Ammoniak enthaltenden Einsatzstoff vorliegt bzw. zusätzlich als Temperaturmoderator in den Spaltreaktor eingeleitet wird, jedoch nicht an der Spaltreaktion teilnimmt.

Zur Gewinnung des Wasserstoffs wird das Spaltgas abgekühlt und einer Trenneinrichtung zugeführt, in der es nach der Entfernung des überwiegenden Teils des nicht umgesetzten Ammoniaks vorzugsweise durch Druckwechseladsorption behandelt wird, wobei eine weitgehend stickstofffreie Wasserstofffraktion sowie ein zum Großteil aus Stickstoff bestehendes und Ammoniak enthaltendes Restgas erzeugt werden. Während die Wasserstofffraktion als Produkt abgegeben werden kann, ist es möglich, das Restgas - beispielsweise zur Befeuerung des Spaltreaktors - zu verbrennen.

Ebenso wie die von den Brennern eines Spaltreaktors erzeugten Rauchgase, deren Wärme nur zu einem gewissen Teil für die Spaltreaktion genutzt werden kann, verlässt das Spaltgas einen Spaltreaktor mit hoher Temperatur und großem Restwärmeinhalt. Um die für die Ammoniakspaltung eingesetzte Energie möglichst vollständig nutzen und die Wasserstofferzeugung effizient durchführen zu können, wird versucht, die Restwärmen der Gase innerhalb des Prozesses etwa zur Vorwärmung von Einsatzstoffen wie Ammoniak und Brennerluft oder zur Erzeugung von Dampf einzusetzten. Da bei der Ammoniakspaltung kein oder nur sehr wenig Prozessdampf erforderlich ist, wird mit Hilfe der Restwärmen produzierter Dampf entweder exportiert oder - beispielsweise über einen "Organic Rankine Cycle" - zur Stromerzeugung verwendet.

Die Stromerzeugung ist jedoch mit einem erheblichen technischen Aufwand verbunden, und es gibt nicht immer einen Abnehmer, zu dem ein wirtschaftlicher Dampfexport möglich ist.

Aufgabe der vorliegenden Erfindung ist es daher, ein Verfahren sowie eine Vorrichtung der gattungsgemäßen Art anzugeben, die es erlauben, bei der Erzeugung von Wasserstoff aus Ammoniak weniger Dampf als Nebenprodukt zu erzeugen, als es nach dem Stand der Technik möglich ist.

Diese Aufgabe wird verfahrensseitig erfindungsgemäß dadurch gelöst, dass ein zweiter Ammoniak enthaltender Einsatzstoff in einem zweiten Spaltreaktor zu einem Wasserstoff und Stickstoff enthaltenden zweiten Spaltgas umgesetzt wird, wobei das heiße erste Spaltgas zur Beheizung des zweiten Spaltreaktors eingesetzt und dabei abgekühlt wird.

Durch das erfindungsgemäße Verfahren wird ein größerer Teil der zur Beheizung des ersten Spaltreaktors importierten Heizenergie zur Spaltung von Ammoniak genutzt, so dass gegenüber dem Stand der Technik die Wasserstoffausbeute höher und/oder der spezifisch Energieverbrauch geringer ist. Darüber hinaus reduziert sich die bei der Restwärmenutzung anfallende Dampfmenge.

Zur Unterstützung der Ammoniakspaltung enthält der erste Spaltreaktor Katalysatormaterial, über das das erste Ammoniak enthaltende Einsatzgas geleitet wird. Vorzugsweise wird die Ammoniakspaltung im zweiten Spaltreaktor ebenfalls katalytisch unterstützt, wozu der zweite Spaltreaktor mit dem gleichen Katalysatormaterial wie der erste Spaltreaktor ausgeführt sein kann. Möglich ist es aber auch, im zweiten Spaltreaktor ein anderes Katalysatormaterial einzusetzen, das etwa bereits bei geringeren Temperaturen eine vergleichbare Aktivität aufweist, wie das im ersten Spaltreaktor verwendete Katalysatormaterial.

Eine bevorzugte Variante des erfindungsgemäßen Verfahrens sieht vor, dass sowohl der erste als auch der zweite Ammoniak enthaltende Einsatzstoff einer externen

Ammoniakquelle - wie beispielsweise einem Ammoniakspeicher - entnommen wird, wobei die beiden Ammoniakquellen verschieden oder identisch sein können. Zweckmäßigerweise wird hierbei das erste Wasserstoff und Stickstoff enthaltende Spaltgas stromaufwärts oder stromabwärts des zweiten Spaltreaktors mit dem zweiten Wasserstoff und Stickstoff enthaltenen Spaltgas zu einem Spaltgasstrom vereinigt, der nachfolgend weiterbehandelt wird, um beispielsweise ein Wasserstoffprodukt zu gewinnen. Die unabhängige Weiterführung und Behandlung des ersten und des zweiten Spaltgases soll jedoch nicht ausgeschlossen sein.

In einer anderen bevorzugten Variante des erfindungsgemäßen Verfahrens ist vorgesehen, den zweiten Ammoniak enthaltenden Einsatzstoff aus einer externen Ammoniakquelle zu importieren und den ersten Ammoniak enthaltenden Einsatzstoff unter Verwendung des im zweiten Spaltreaktor gewonnenen zweiten Spaltgases zu bilden. Zweckmäßigerweise wird die Gesamtmenge des zweiten Spaltgases zur Bildung des ersten Ammoniak enthaltenden Einsatzstoffs verwendet und unverändert oder nach Zumischung eines weiteren, beispielsweise aus einer externen Ammoniakquelle entnommenen Ammoniak enthaltenden Stoffstroms als erster Ammoniak enthaltender Einsatzstoff dem ersten Spaltreaktor zur Umsetzung in das erste Spaltgas zugeführt.

Das erfindungsgemäße Verfahren weiterbildend wird vorgeschlagen, das bei der Beheizung des zweiten Spaltreaktors abgekühlte Spaltgas - ggf. nach Zumischung des zweiten Spaltgases - einer Trennung zu unterwerfen, bei der ein wasserstoffreiches Produktgas und ein stickstoffreiches, brennbare Stoffe enthaltendes Restgas entstehen. Nach einer weiteren Abkühlung wird das Spaltgas hierzu bevorzugt durch Druckwechseladsorption behandelt, wobei eine weitgehend stickstofffreie Wasserstofffraktion sowie ein zum Großteil aus Stickstoff bestehendes und brennbare Stoffe enthaltendes Restgas erzeugt werden. Die weitere Abkühlung, bei der beispielsweise ein regelbarer Luftkühler eingesetzt wird, erfolgt zweckmäßigerweise nur bis knapp oberhalb des Taupunkts, so dass kein Kondensat entsteht, das neben Wasser auch nicht umgesetztes Ammoniak enthält. Falls sich die Entstehung von Kondensat während der weiteren Abkühlung nicht vermeiden lässt, ist es möglich, das Kondensat ganz oder teilweise zurückzuführen und einem der beiden Spaltreaktoren als Einsatz aufzugeben. Während die Wasserstofffraktion als Produkt abgegeben werden kann, wird das Restgas - etwa zur Beheizung des ersten Spaltreaktors - verbrannt oder einer weiteren Trennung unterworfen, bei der zusätzlicher Produktwasserstoff und/oder eine Produktreinheit aufweisende, kommerziell nutzbare Stickstofffraktion sowie eine als Einsatzstoff verwertbare Ammoniakfraktion entstehen.

Aufgrund seines hohen Stickstoffanteils ist der Heizwert des Restgases vergleichsweise gering. Um bei der Beheizung des ersten Spaltreaktors dennoch Rauchgase mit ausreichend hoher Temperatur und in einer Menge erzeugen zu können, die es erlaubt, die Rauchgasrestwärme durch den Einsatz entsprechend kleiner und preiswerter Wärmetauscher zu nutzen, wird vorgeschlagen, aus einer Sauerstoffquelle einen sauerstoffreichen Stoffstrom zuzuführen und direkt oder nach Zumischung von Luft bei der Verbrennung des Restgases als Oxidationsmittel einzusetzen.

Als sauerstoffreich gilt im Rahmen der vorliegenden Erfindung ein Stoffstrom, der zu mehr als 25% aus Sauerstoff besteht. Bevorzugt weist er jedoch einen höheren Sauerstoffgehalt von beispielsweise mehr als 99% auf.

Bei der Sauerstoffquelle kann es sich beispielsweise um einen kryogenen Luftzerleger handeln. Denkbar ist es auch, als Sauerstoffquelle einen Elektrolyseur einzusetzen, der Wasser elektrochemisch zerlegt und einen wasserstoff- sowie einen sauerstoffreichen Stoffstrom erzeugt. Während zumindest ein Teil des sauerstoffreichen Stoffstroms direkt oder nach Zumischung von Luft als Oxidationsmittel bei der Verbrennung des Restgases eingesetzt wird, kann der wasserstoffreiche Stoffstrom als Brennstoff zur Befeuerung des ersten Spaltreaktors und/oder zur Ergänzung der Menge des durch die Ammoniakspaltung erzeugten Wasserstoffs verwendet werden. Der Elektrolyseur kann die beiden Stoffströme mit gleichen oder unterschiedlichen Drücken erzeugen. Zweckmäßigerweise wird sowohl der sauerstoff- als auch der wasserstoffreiche Stoffstrom mit einem Druck erzeugt, der ausreichend hoch ist, um jeden der beiden Stoffströme ohne den Einsatz eines Verdichters ihrer weiteren Verwendung zuführen zu können.

Zur Vermeidung einer Überhitzung ist vorgesehen, die Spaltreaktoren während des Abfahrbetriebs mit Dampf und/oder Stickstoff und/oder Ammoniak zu kühlen. Weiterhin betrifft die Erfindung eine Vorrichtung zur Erzeugung von Wasserstoff aus Ammoniak, mit einem, über einen importierten Energieträger beheizbaren ersten Spaltreaktor, dem ein erster Ammoniak enthaltender Einsatzstoff zuführbar ist, um Ammoniak mit katalytischer Unterstützung zu spalten und ein heißes, Wasserstoff und Stickstoff enthaltendes erstes Spaltgases zu erhalten.

Vorrichtungsseitig wird die gestellte Aufgabe dadurch gelöst, dass sie einen mit dem ersten Spaltreaktor verbundenen zweiten Spaltreaktor umfasst, dem ein zweiter Ammoniak enthaltender Einsatzstoff zuführbar ist, um Ammoniak zu spalten und ein Wasserstoff und Stickstoff enthaltendes zweites Spaltgases zu erhalten, und der mit Hilfe des heißen ersten Spaltgases unter Bildung eines abgekühlten ersten Spaltgases beheizbar ist.

Während der erste Spaltreaktor zweckmäßigerweise ähnlich aufgebaut ist wie ein durch elektrischen Strom und/oder über Brenner beheizbarer Dampfreformer oder ein Autothermal-Reformer, die beide zur großtechnischen Synthesegaserzeugung eingesetzt werden, sieht eine bevorzugte Variante der Erfindung vor, dass der zweite Spaltreaktor ausgeführt ist wie ein ebenfalls zur Synthesegaserzeugung einsetzbarer und der Fachwelt unter der Bezeichnung Gas-heated Reformer oder GHR bekannter Reaktor. Ein GHR umfasst von einem heißen Heizgas umströmbare Reaktorrohre, durch die ein umzusetzender Einsatzstoff geleitet wird. Die beispielsweise als Bajonett-Rohre ausgeführten Reaktorrohre, des zweiten Spaltreaktors enthalten zweckmäßigerweise ein Katalysatormaterial, das die Ammoniakspaltung unterstützt.

Die erfindungsgemäße Vorrichtung weiterbildend wird vorgeschlagen, den zweiten Spaltreaktor mit dem gleichen oder einem anderen Katalysatormaterial auszuführen, wie den ersten Spaltreaktor.

Weiterhin sieht eine Variante der Erfindung eine mit dem ersten und dem zweiten Spaltreaktor sowie einer externen Ammoniakquelle verbundene Verteileinrichtung vor, über die ein Ammoniak enthaltender Stoffstrom aus der externen Ammoniakquelle bezogen und als erster und zweiter Ammoniak enthaltenden Einsatzsoff auf die beiden Spaltreaktoren verteilt werden kann. Vorzugsweise ist keiner der beiden Spaltreaktoren mit einer weiteren externen Ammoniakquelle verbunden.

Eine andere Variante der Erfindung sieht vor, dass der erste Spaltreaktor mit dem zweiten Spaltreaktor derart verbunden ist, dass im zweiten Spaltreaktor erhältliches Spaltgas zur Bildung des ersten Ammoniak enthaltenden Einsatzstoffs verwendbar ist. In dieser Variante ist vorzugsweise nur der zweite Spaltreaktor über eine Zuführleitung mit einer externen Ammoniakquelle verbunden, aus der der zweite Ammoniak enthaltende Einsatzsoff zugeführt wird. Eine Verbindung des ersten Spaltreaktors mit derselben oder einer anderen externen Ammoniakquelle soll allerdings nicht ausgeschlossen sein, so dass zur Bildung des ersten Ammoniak enthaltenden Einsatzstoffes ein Ammoniak enthaltender Stoffstrom importiert und mit im zweiten Spaltreaktor erhältlichem zweitem Spaltgas gemischt werden kann.

Zweckmäßigerweise gehört zu der erfindungsgemäßen Vorrichtung eine Trenneinrichtung, mit der Wasserstoff unter Erhalt eines stickstoffreichen, brennbare Stoffe umfassenden Restgases aus Spaltgas abgetrennt werden kann. Bevorzugt umfasst die Trenneinrichtung einen Druckwechseladsorber, der in der Lage ist, aus dem Spaltgas eine aufgrund ihrer Reinheit und ihres Ducks als Produkt abgebbare Wasserstofffraktion abzutrennen und über eine Produktgasleitung einem Abnehmer zuzuführen. Stickstoff sowie ebenfalls im Spaltgas vorliegendes Ammoniak können dem Druckwechseladsorber als Restgas entnommen werden.

Die Trenneinrichtung kann einen zweiten Druckwechseladsorber umfassen, der dazu eingerichtet ist, eine Produktreinheit aufweisende Stickstofffraktion aus dem bei der Erzeugung der Wasserstofffraktion anfallende Restgas abzutrennen. Alternativ kann die Trenneinrichtung mit einer Verbrennungseinrichtung verbunden sein, in die das Restgas einleitbar ist, um verbrannt zu werden und beispielsweise Wärme zur Beheizung des ersten Spaltreaktors zu liefern.

Um das Restgas effektiv verbrennen zu können, weist die erfindungsgemäße Vorrichtung in einer bevorzugten Variante eine mit der Verbrennungseinrichtung verbundene Sauerstoffquelle auf, aus der ein sauerstoffreicher Stoffstrom entnommen und direkt oder nach Zumischung von Luft bei der Verbrennung des Restgases als Oxidationsmittel eingesetzt werden kann. Besonders bevorzugt handelt es sich bei der Sauerstoffquelle um einen Elektrolyseur, der Wasser elektrochemisch zerlegen und einen Wasserstoff- sowie einen sauerstoffreichen Stoffstrom erzeugen kann. Der Elektrolyseur kann beispielsweise eine Festoxid-Elektrolysezelle umfassen, die in der Lage ist, bei Betriebstemperaturen zwischen 500°C und 850°C Wasserdampf zu spalten und einen heißen sauerstoffreichen Stoffstrom zu erzeugen.

Zweckmäßigerweise ist der als Sauerstoffquelle dienende Elektrolyseur nicht nur mit der Verbrennungseinrichtung, sondern auch mit der Trenneinrichtung verbunden, so dass der durch den Elektrolyseur erzeugbare wasserstoffreiche Stoffstrom dazu verwendet werden kann, die Menge der durch die Ammoniakspaltung erzeugten, als Produkt abgebbaren Wasserstofffraktion zu ergänzen. Falls die Zusammensetzung des wasserstoffreichen Stoffstroms nicht den an ein Wasserstoffprodukt gestellten Anforderungen genügt, kann zur Abtrennung von Verunreinigungen zwischen dem Elektrolyseur und der Trenneinrichtung eine Reinigungsvorrichtung angeordnet sein. Alternativ kann der Elektrolyseur mit der Trenneinrichtung stromaufwärts des zur Erzeugung der Wasserstofffraktion eingesetzten Druckwechseladsorbers verbunden sein, so dass im wasserstoffreichen Stoffstrom enthaltene Verunreinigungen durch diesen Druckwechseladsorber entfernt werden.

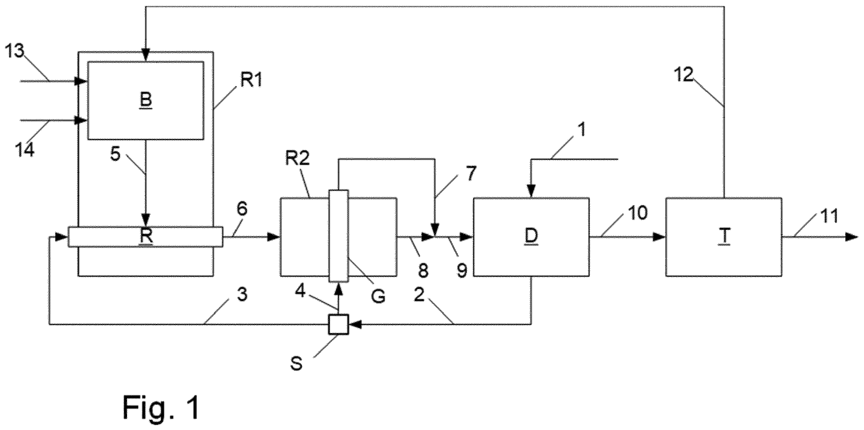

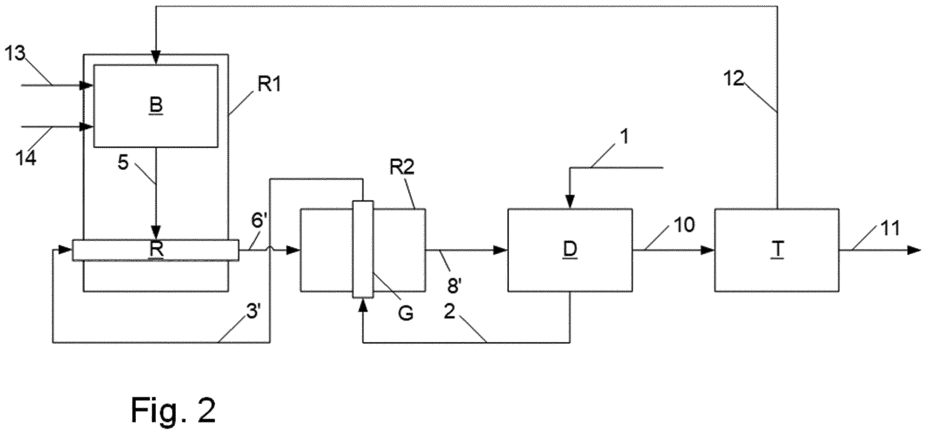

Im Folgenden soll die Erfindung anhand zweier in den **Figuren 1** und **2** schematisch dargestellter Ausführungsbeispiele näher erläutert werden.

Die Figur 1 zeigt eine bevorzugte Ausgestaltung der Erfindung, bei der die den Spaltreaktoren zugeführten Ammoniak enthaltende Einsatzstoffe gleiche Zusammensetzungen besitzen.

Die Figur 2 zeigt eine andere bevorzugte Ausführung der Erfindung, bei der die den Spaltreaktoren zugeführten Ammoniak enthaltende Einsatzstoffe unterschiedliche Zusammensetzungen besitzen.

In beiden Figuren sind gleiche Komponenten mit gleichen Bezugszeichen markiert.

Im Ausführungsbeispiel der Figur 1 wird über Leitung 1 ein Ammoniak enthaltender Stoffstrom aus einer externen Ammoniakquelle (nicht dargestellt) entnommen und der Wärmerückgewinnung D zugeführt, die er angewärmt über Leitung 2 verlässt, um in einem Strömungsteiler S in einen ersten Ammoniak enthaltenden Einsatzstoff 3 und einen zweiten Ammoniak enthaltenden Einsatzstoff 4 aufgeteilt zu werden.

Der erste Ammoniak enthaltende Einsatzstoff wird dem ersten, wie ein Dampfreformer aufgebauten ersten Spaltreaktor R1 zugeführt und in dessen Spaltrohre R eingeleitet, die mit in der Verbrennungseinrichtung B erzeugter Wärme 5 beheizt werden. Mit katalytischer Unterstützung wird bei Temperaturen zwischen 500 und 1000°C und Drücken zwischen 5 und 50 barg der überwiegende Teil des zugeführten Ammoniaks gespalten, so dass dem ersten Spaltreaktor R1 ein heißes, weitgehend aus Stickstoff und Wasserstoff bestehendes und nicht umgesetztes Ammoniak enthaltendes erstes Spaltgas 6 entnommen werden kann.

Der zweite Ammoniak enthaltende Einsatzstoff 4, der die gleiche Zusammensetzung wie der erste Einsatzstoff 3 besitzt, wird dem zweiten, wie ein Gas-heated Reformer aufgebauten zweiten Spaltreaktor R2 zugeführt und in dessen Spaltrohre G eingeleitet, die durch das heiße erste Spaltgas 6 beheizt werden. Mit katalytischer Unterstützung wird ein großer Teil des zugeführten Ammoniaks gespalten, so dass dem zweiten Spaltreaktor R2 ein weitgehend aus Stickstoff und Wasserstoff bestehendes und nicht umgesetztes Ammoniak enthaltendes zweites Spaltgas 7 sowie das abgekühlte erste Spaltgas 8 entnommen werden können. Die beiden Spaltgase 7 und 8 werden anschließend zum Spaltgasstrom 9 vereinigt, der in der Wärmerückgewinnung D gegen den aus der externen Ammoniakquelle zugeführten Ammoniak enthaltenden Stoffstrom 1 abgekühlt wird, ehe er über Leitung 10 in die Trenneinrichtung T gelangt, wo es beispielsweise durch Druckwechseladsorption behandelt wird, um eine Produktreinheit aufweisende Wasserstofffraktion 11 und ein Restgas 12 zu erhalten. Das Restgas 12, das zum überwiegenden Teil aus Stickstoff besteht, daneben aber auch brennbare Komponenten wie Ammoniak und Wasserstoff enthält, wird zusammen mit dem aus einer nicht dargestellten externen Quelle importierten Brennstoff 13 der Verbrennungseinrichtung B zugeführt und mit dem Oxidationsmittel 14, bei dem es sich um Luft, mit Sauerstoff angereicherte Luft oder technisch reinen Sauerstoff handelt, zur Beheizung des ersten Spaltreaktors R1 verbrannt.

Im Unterschied zum Ausführungsbeispiel des Figur 1, wird im Ausführungsbeispiel der Figur 2 der angewärmte Ammoniak enthaltende Stoffstrom 2 nicht aufgeteilt, sondern zur Gänze als zweiter Ammoniak enthaltender Einsatzstoff dem zweiten Spaltreaktor R2 zugeführt und zum zweiten Spaltgas umgesetzt. Über die Leitung 3' wird das zweite Spaltgas als erster Ammoniak enthaltender Einsatzstoff in die Spaltrohre R des ersten Spaltreaktors G1 geleitet, aus denen ein heißes, weitgehend aus Stickstoff und Wasserstoff bestehendes und nicht umgesetztes Ammoniak enthaltendes erstes Spaltgas 6' entnommen und zur Beheizung des zweiten Spaltreaktors R2 weitergeitet wird. Das bei der Beheizung abgekühlte erste Spaltgas 8' wird anschließend der Wärmerückgewinnung D zugeführt und entsprechend dem Spaltgasstrom 9 der Figur 1 weiterbehandelt.

## Patentansprüche

1. Verfahren zur Erzeugung von Wasserstoff, wobei ein erster Ammoniak enthaltender Einsatzstoff (3, 3') einem über einen importierten Energieträger (13) beheizten ersten Spaltreaktor (R1) zugeführt wird, um Ammoniak mit katalytischer Unterstützung in Wasserstoff und Stickstoff zu spalten und ein heißes, Wasserstoff und Stickstoff enthaltendes ersten Spaltgas (6, 6') zu erhalten, **dadurch gekennzeichnet, dass** ein zweiter Ammoniak enthaltender Einsatzstoff (4, 2) in einem zweiten Spaltreaktor (R2) zu einem Wasserstoff und Stickstoff enthaltenden zweiten Spaltgas (7, 3') umgesetzt wird, wobei das heiße erste Spaltgas (6, 6') zur Beheizung des zweiten Spaltreaktors (R2) eingesetzt und dabei abgekühlt wird.

2. Verfahren nach Anspruch 1, **dadurch gekennzeichnet, dass** zur Umsetzung des zweiten Ammoniak enthaltenden Einsatzstoffs (4, 2) im zweiten Spaltreaktor (R2) ein Katalysator eingesetzt wird.

3. Verfahren nach einem der beiden Ansprüche 1 oder 2, **dadurch gekennzeichnet, dass** der erste (3) und der zweite Ammoniak enthaltende Einsatzstoff (4) einer gemeinsamen Ammoniakquelle entnommen werden.

4. Verfahren nach einem der Ansprüche 1 oder 2, **dadurch gekennzeichnet, dass** das im zweiten Spaltreaktor (R2) erhaltene zweite Spaltgas (3') zur Bildung des ersten Ammoniak enthaltenden Einsatzstoffs verwendet wird.

5. Verfahren nach einem der Ansprüche 1 bis 4, **dadurch gekennzeichnet, dass** zumindest das abgekühlte erste Spaltgas (8, 8') einer Trennung (T) unterworfen wird, bei der ein wasserstoffreiches Produktgas (11) und ein stickstoffreiches, brennbare Stoffe enthaltendes Restgas (12) entstehen.

6. Verfahren nach Anspruch 5, **dadurch gekennzeichnet, dass** das Restgas (12) verbrannt wird, um Wärme (5) für den Betrieb des ersten Spaltreaktors (R1) bereitzustellen.

7. Verfahren nach Anspruch 5, **dadurch gekennzeichnet, dass** aus dem das Restgas (12) eine Produktreinheit aufweisende Stickstofffraktion abgetrennt wird.

8. Verfahren nach Anspruch 6, **dadurch gekennzeichnet, dass** aus einer Sauerstoffquelle ein sauerstoffreicher Stoffstrom zugeführt und direkt oder nach Zumischung von Luft bei der Verbrennung des Restgases als Oxidationsmittel (14) eingesetzt wird.

9. Vorrichtung zur Erzeugung von Wasserstoff aus Ammoniak, mit einem, über einen importierten Energieträger (13) beheizbaren ersten Spaltreaktor (R1), dem ein erster Ammoniak enthaltender Einsatzstoff (4, 3') zuführbar ist, um Ammoniak mit katalytischer Unterstützung zu spalten und ein heißes, Wasserstoff und Stickstoff enthaltendes erstes Spaltgases (6, 6') zu erhalten, **dadurch gekennzeichnet, dass** sie einen mit dem ersten Spaltreaktor (R1) verbundenen zweiten Spaltreaktor (R2) umfasst, dem ein zweiter Ammoniak enthaltender Einsatzstoff (4, 2) zuführbar ist, um Ammoniak zu spalten und ein Wasserstoff und Stickstoff enthaltendes zweites Spaltgases (7, 3') zu erhalten, und der mit Hilfe des heißen ersten Spaltgases (6, 6') unter Bildung eines abgekühlten ersten Spaltgases (8, 8') beheizbar ist.

10. Vorrichtung nach Anspruch 9, **dadurch gekennzeichnet, dass** der zweite Spaltreaktor (R2) einen die Ammoniakspaltung unterstützenden Katalysator umfasst.

11. Vorrichtung nach einem der Ansprüche 9 oder 10, **dadurch gekennzeichnet, dass** sie einen mit dem ersten (R1) und dem zweiten Spaltreaktor (R2) sowie einer Ammoniakquelle verbunden Strömungsteiler (S) zur Bildung des ersten (3) und des zweiten Ammoniak enthaltenden Einsatzstoffs (4) umfasst.

12. Vorrichtung nach einem der Ansprüche 9 oder 11, **dadurch gekennzeichnet, dass** der erste (R1) mit dem zweiten Spaltreaktor (R2) derart verbunden ist, dass das im zweiten Spaltreaktor (R2) erhältliche zweite Spaltgas (3') zur Bildung des ersten Ammoniak enthaltenden Einsatzstoffs verwendbar ist.

13. Vorrichtung nach einem der Ansprüche 9 bis 12, **dadurch gekennzeichnet, dass** sie eine Trenneinrichtung (T) umfasst, in der zumindest aus dem abgekühlten ersten Spaltgas (8, 8') ein wasserstoffreiches Produktgas (11) und ein stickstoffreiches, brennbare Stoffe enthaltendes Restgas (12) erzeugt werden können.

14. Vorrichtung nach Anspruch 13, **dadurch gekennzeichnet, dass** sie eine mit der Trenneinrichtung (T) und dem ersten Spaltreaktor (R1) verbundene Verbrennungseinrichtung (B) umfasst, der über den das Restgas (12) verbrannt werden kann, um Wärme (5) für den Betreib des ersten Spaltreaktors (R1) bereitzustellen.

15. Vorrichtung nach Anspruch 14, **dadurch gekennzeichnet, dass** sie eine mit der Verbrennungseinrichtung (B) verbunden Sauerstoffquelle umfasst, aus der Sauerstoff entnommen und direkt oder nach Zumischung von Luft bei der Verbrennung des Restgases als Oxidationsmittel (14) eingesetzt werden kann.
